# EUROPÄISCHE PATENTSCHRIFT

(11) **EP 0 376 029 B1**
(45) Veröffentlichungstag und Bekanntmachung des Hinweises auf die Patenterteilung: **27.07.1994**
(21) Anmeldenummer: 89122764.7
(22) Anmeldetag: 09.12.1989
(51) Int. Cl.: G02F 1/137

(54) **Flüssigkristalldisplay für Schwarz/Weiss-Darstellung**
Black/white liquid-crystal display
Afficheur à cristal liquide pour la représentation noir/blanc

(30) Priorität: 24.12.1988 DE 3843767
(43) Veröffentlichungstag der Anmeldung: 04.07.1990
(73) Patentinhaber: Nokia (Deutschland) GmbH, 75175 Pforzheim (DE)
(72) Erfinder: Brosig, Stefan, Dr., D-7000 Stuttgart (DE); Waldmann, Jürgen, Dr., D-7036 Schönaich (DE)

(56) Entgegenhaltungen:
- EP-A- 0 259 822
- EP-A- 0 282 300
- PROCEEDINGS OF THE SOCIETY FOR INFORMATION DISPLAY (SID), Band 28, Nr. 2, 1987,Seiten 155-158, SID, New York, US; K. YOSHIDA et al.: "Generation of a highpretilt angle by rubbing: Application to supertwisted nematic LCDs"
- J. APPL. PHYS., Band 64, Nr. 2, 15. Juli 1988, Seiten 614-627, American
- Institute of Physics, New York, US; H.L. ONG: "Origin and characteristics ofthe optical properties of general twisted nematic liquid-crystal displays"
- PATENT ABSTRACTS OF JAPAN, Band 4, Nr. 86 (P-16)[568], 20. Juni 1980;& JP-A-55 50 222
- PATENT ABSTRACTS OF JAPAN, Band 3, Nr. 117 (E-141), 29. September 1979;& JP-A-54 94 060
- Appl. Phys. Lett., 45(1984), No.17, S.1021-1023

## Beschreibung

### TECHNISCHES GEBIET

Die Erfindung betrifft ein Flüssigkristalldisplay für Schwarz/Weiß-Darstellung. Streng genommen handelt es sich bei derartigen Displays um solche für Hell/Dunkel-Darstellung, da mit solchen Displays nicht nur weißes Licht, sondern auch farbiges Licht ohne wesentliche Farbverschiebung geschaltet werden kann.

### STAND DER TECHNIK

Flüssigkristalldisplays für Schwarz/Weiß-Darstellung sind unter Ausnutzung verschiedener physikalischer Effekte realisierbar. Die meisten dieser Displays nutzen eine zwischen zwei gekreuzten Polarisatoren angeordnete Flüssigkristallzelle, die einen nematischen Flüssigkristall enthält, dem mit Hilfe von Orientierungsschichten auf den Zellenplatten und mit Hilfe einer chiralen Dotierung eine Verdrehung, der sog. Twist, eingeprägt ist. Das üblichste Display ist das TN-Display. Bei ihm beträgt der Twist ρ 90° und das Produkt δ aus Zellendicke d und Anisotropie des Brechungsindex Δn liegt bei Werten von über 1 µm. TN-Displays sind billig und einfach herstellbar, weisen guten Kontrast auf, sind jedoch schlecht multiplexierbar.

Um verbesserte Multiplexierbarkeit zu erzielen, sind verschiedene Displayarten entwickelt worden, von denen die bekanntesten diejenigen mit STN-Doppelzelle, SBE-Doppelzelle und die OMI-Displays sind. Eine einfache STN-Zelle weist einen Twist von 240° und einen Wert δ von etwa 1 µm auf. Der Pretilt ϑ , d. h. der Anstellwinkel der Moleküle gegenüber der benachbarten Zellenplatte beträgt nur sehr wenige Grad. Diese Zellen sind gut multiplexierbar, weisen geringere Winkelabhängigkeit des Kontrastes auf als TN-Zellen, sind jedoch farbig. Um den Farbeffekt aufzuheben, werden zwei STN-Zellen mit entgegengesetztem Twist hintereinandergeschaltet, wodurch ein farbneutralisiertes STN-Display mit Doppelzelle gebildet ist. Die Farbneutralität besteht jedoch nur innerhalb eines sehr engen Blickwinkelbereichs von etwa 10°.

Eine einfache SBE-Zelle ist im Artikel von T. J. Scheffer und J. Nehring in Apple Phys. Let. 45 (10), 1984, S. 1021 - 1023 unter dem Titel "A new highly multiplexable liquid crystal display" beschrieben. Auch diese Zelle weist starke Farbe auf, sie erscheint nämlich gelb oder blau. Daher werden zum Erzielen von Farbneutralität bei Verwenden des Supertwisted Birefrigence Effect ebenso wie bei STN-Zellen zwei Zellen mit entgegengesetztem Twist hintereinandergeschaltet. Jede einzelne SBE-Zelle weist einen Twist von 270°, einen Pretilt > 5° und einen δ-Wert von etwa 0,8 µm auf. Die Multiplexierbarkeit und die Winkelabhängigkeit von Kontrast und Farbe sind noch besser als bei STN-Doppelzellen, jedoch ist die Herstellung erheblich schwieriger. Außerdem ist trotz der verbesserten Winkelabhängigkeit des Farbeindrucks diese Winkelabhängigkeit immer noch unbefriedigend. STN- und SBE-Zellen arbeiten mit Polarisatoren, die unter 30 bzw. 60° gegen die Orientierungsrichtungen verdreht sind.

Einen sehr guten Weißeindruck über einen großen Winkelbereich weisen OMI-Displays auf. Die Winkelabhängigkeit des Kontrastes ist jedoch unbefriedigend. OMI-Displays verfügen über Zellen mit einem Twist von bis zu 210° und δ-Werten bis herab zu 0,4 µm, vorzugsweise 0,55 µm. Derartige Zellen sind in zwei Artikeln von M. Schadt und F. Leenhouts beschrieben und zwar unter dem Titel "Electro-optical performance of a new black-white and highly multiplexable liquid crystal display" in Apple Phys. Let. 50 (5) 1987, S. 236 - 238 und unter dem Titel "The optical mode interference liquid crystal display: dependence on material and cell parameters" in SID 87 Digest, S. 372 - 375. Vorteil dieser Zellen ist, daß sie einfach herstellbar sind und Multiplexraten von Nmax = 1000 Linien aufweisen können. Maximaler Kontrast wird mit gekreuzten Polarisatoren erzielt, von denen zumindest einer parallel zu einer Orientierungsrichtung steht. Wird der Winkel zwischen den Polarisationsrichtungen auf über 90° vergrößert und werden die Polarisatoren gegenüber den Orientierungsrichtungen verdreht, nimmt die Helligkeit zu, jedoch der Kontrast ab. Eine weitere Flüssigkristallzelle ist aus EP-A-282 300 bekannt.

### DARSTELLUNG DER ERFINDUNG

Das erfindungsgemäße Flüssigkristalldisplay für Schwarz/Weiß-Darstellung weist zwischen einer oberen und einer unteren Zellenplatte eine nematische Flüssigkristallschicht mit einem Twist von mindestens 240°, im wesentlichen 270°, auf. Die Zellendicke und das Flüssigkristallmaterial sind so gewählt, daß der δ-Wert nicht größer ist als etwa 0,6. Das Material der Orientierungsschicht ist so gewählt, daß es außer der Orientierung der Flüssigkristallmoleküle zusätzlich einen Pretilt derselben von zwischen 7° und 20° bewirkt. Vorteilhafterweise liegt der δ-Wert zwischen 0,35 und 0,45 und der Pretilt mindestens etwa 10°. Optimale Multiplexierbarkeit wird bei der letztgenannten Anordnung dann erzielt, wenn die Polarisatoren um etwa 45° gegenüber den Orientierungsrichtungen verdreht sind.

Erfindungsgemäße Displays zeichnen sich vor allem durch außerordentlich geringe Winkelabhängigkeit von Kontrast und Weißeindruck aus. Gegenüber Zellen mit ähnlich guter Winkelabhängigkeit des Kontrastes, also doppelten STN- oder SBE-Zellen, fällt vor allem die so gut wie nicht vorhandene Winkelabhängigkeit des Weißeindrucks auf. Auch bei sehr flachem Blickwinkel ist kaum eine Farbänderung gegenüber rechtwinkligem Blicken auf das Display erkennbar. Wegen des sehr weiten Blickwinkelbereichs mit sehr gleichbleibendem Eindruck wurde erfindungsgemäßen Displays der Name "Extended Viewing Angle-Display" gegeben, abgekürzt EVA-Display.

Mit dem als bevorzugter Ausführungsform genannten EVA-Display wurden Multiplexraten von Nmax ≈ 350 Linien erzielt. Dieser Wert liegt zwar geringer als derjenige von OMI-Displays, jedoch höher als der bisher realisierter anderer Zellen. Mit EVA-Displays mit einem Twistwinkel von 360° wurden noch deutlich höhere Multiplexraten erzielt als 350 Linien, jedoch leiden derartige Zellen bisher an nicht ausreichender optischer Homogenität.

Für hohe optische Homogenität ist es von Vorteil, den Pretilt möglichst hoch zu wählen. Für einen Twist von 360° sollte stabil er bei über 20° liegen. Derartig hohe Twistwinkel lassen sich stabil mit schräg aufgedampftem SiO erzielen. Für Displays mit geringerem Twist ist es jedoch von Vorteil, als Material für die Orientierungs- und Pretiltschicht Polyphenylen zu verwenden, da sich dieses Material mit einem üblichen Spincoat-Verfahren beschichten läßt, also einem Verfahren, wie es auch zum Aufbringen anderer Schichten, z. B. von Fotolackschichten, während des Herstellprozesses von Flüssigkristalldisplays angewandt wird. Bei sehr sorgfältiger Verfahrensführung sind jedoch auch mit Polyphenylen Pretiltwinkel bis 24° erzielbar.

### KURZE BESCHREIBUNG DER FIGUREN

- Fig. 1: schematischer Querschnitt durch ein Flüssigkristalldisplay mit dem Effekt des "Extended Viewing Angle" (EVA-Display);
- Fig. 2: schematische Draufsicht auf ein EVA-Display zum Erläutern von Winkeln zwischen Orientierungs- und Polarisatorrichtungen; und
- Fig. 3: ein Diagramm, in dem der Transmissionsverlauf über der Spannung für zwei EVA-Displays mit unterschiedlichen Polarisatoranordnungen dargestellt ist (relative Transmission).

### WEGE ZUM AUSFÜHREN DER ERFINDUNG

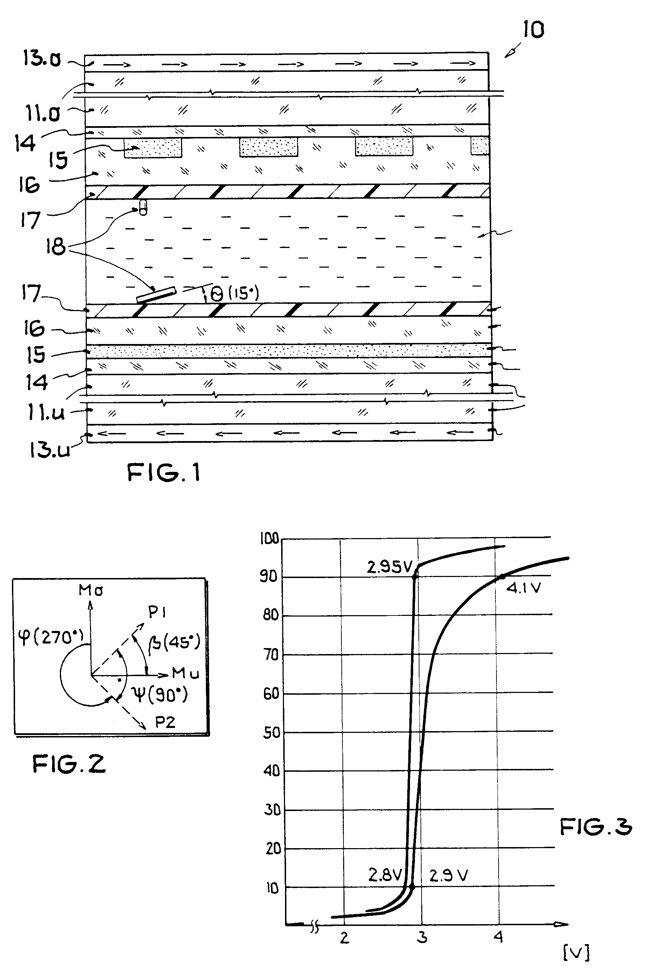

Der Querschnitt durch ein EVA-Display 10 gemäß Fig. 1 ist der Anschaulichkeit halber nicht maßstabsgetreu gezeichnet. So sind eine obere Zellenplatte 11.o und eine Untere Zellenplatte 11.u und eine Flüssigkristallschicht 12 mit vergleichbarer Dicke dargestellt, obwohl die Dicke der Zellenplatten etwa 1,1 mm, die Dicke der Flüssigkristallschicht dagegen nur etwa 4 µm beträgt.

Jede Zellenplatte trägt auf ihrer der Flüssigkristallschicht 12 abgewandten Seite einen Polarisator, d. h. die obere Zellenplatte 11.o trägt einen oberen Polarisator 13.o und die untere Zellenplatte 11.u trägt einen unteren Polarisator 13.u. Diese beiden Polarisatoren sind unter 90° gegeneinander gekreuzt und stehen unter 45°zu den unten erläuterten Orientierungsrichtungen. Dies ist durch Pfeile dargestellt, die beim oberen Polarisator 13.o in entgegengesetzter Richtung zu denjenigen beim unteren Polarisator 13.u zeigen.

Auf der der Flüssigkristallschicht 12 zugewandten Seite tragen die beiden Zellenplatten jeweils vier Schichten und zwar zunächst eine Barriereschicht 14 aus SiO₂, eine Elektrodenschicht 15 mit strukturierten Elektroden aus ITO, dann eine Isolierschicht 16, die wie die Barriereschicht 14 aus SiO₂ besteht und schließlich eine Orientierungsschicht 17 aus Polyphenylen. Die Barriereschicht 14 ist eine dünne Schicht, die vom Hersteller der ITO-Schicht aufgebracht wird. Sie dient dazu, zu verhindern, daß Natriumionen aus dem Glas der Zellenplatten in das ITO diffundiert. Es hat sich jedoch herausgestellt, daß diese Barriereschicht 14 die Diffusion von Natriumionen zwar so weit vermindert, daß die ITO-Schicht nicht darunter leidet, daß jedoch noch immer so viele Natriumionen hindurchdiffundieren können, daß eine wichtige Eigenschaft des Polyphenylens der Orientierungsschicht 17 darunter leidet, nämlich die Eigenschaft, einen hohen Pretilt ϑ einstellen zu können. Um die Diffusion von Natriumionen so weit wie möglich zu unterbinden, ist daher die Isolierschicht 16 vorhanden. Diese trägt zugleich dazu bei, daß gute elektrische Isolierung der Elektroden in der Elektrodenschicht 15 zum Flüssigkristall der Flüssigkristallschicht 12 besteht.

Beim Flüssigkristall handelt es sich um ein nematisches Material. Beim Ausführungsbeispiel handelt es sich um die Flüssigkristallmischung 4940 von Hoffmann-La Roche mit einer Anisotropie des Brechungsindex von etwa 0,094. Diesem Flüssigkristall sind 1,75 % des chiralen Dotierungsmaterials CB 15, ebenfalls von Hoffmann-La Roche zugemischt. Die Dicke d der Flüssigkristallschicht beträgt, wie bereits oben angemerkt, 4 µm. Für das Produkt δ aus Dicke d und Anisotropie des Brechungsindex Δn ergibt sich damit der Wert 0,376.

Die die Orientierungsschicht 17 bildende Polyphenylenschicht ist mit einer Samtwalze gerieben, damit sie nicht nur den genannten Pretilt ϑ, sondern auch eine Orientierung der ihr, benachbarten Flüssigkristallmoleküle 18 bewirkt. Die Orientierungsrichtung für die Moleküle 18 an der unteren Zellenplatte 11.u ist in Fig. 2 mit Mu bezeichnet, während die Orientierungsrichtung an der oberen Zellenplatte 11.o mit Mo bezeichnet ist. Die beiden Richtungen stehen rechtwinklig aufeinander. Zwischen den beiden Flüssigkeitsgrenzen sind die Moleküle 18 der Flüssigkristallschicht 12 rechts herum, in Draufsicht also im Gegen-Uhrzeigersinn, um den Twist ρ von 270° verdreht. Dies gilt jedoch nur, solange keine Ansteuerspannung an den Elektroden der beiden Elektrodenschichten 15 liegt. Wirkt ein elektrisches Feld auf die Flüssigkristalle, stellen sie sich parallel zu diesem, wodurch die genannte Verschraubung wegfällt.

Mit Hilfe der beiden Polarisatoren 13.o und 13.u wird ein Schwarz/Weiß-Effekt erzielt. Solange keine Spannung anliegt, wandelt die Flüssigkristallschicht 12 linearpolarisiertes Licht, wie es durch einen der beiden Polarisatoren in sie eintritt, in zirkularpolarisiertes Licht um. Dies hat zur Folge, daß Licht durch den anderen Polarisator austritt. Ist die Zelle dagegen angesteuert, d. h. haben sich die Flüssigkristallmoleküle 18 im elektrischen Feld zwischen den Elektroden aufgerichtet, bleibt das eingestrahlte, linearpolarisierte Licht unverändert, weswegen es vom anderen Polarisator abgeblockt wird; die angesteuerten Bereiche erscheinen demgemäß dunkel. Der Hell/Dunkel-Kontrast beträgt bei einer Blickrichtung rechtwinklig zur Zellenebene etwa 10 : 1 bis 12 : 1. Der Farbeindruck entspricht einem Weiß mit sehr leichtem Blaustich. Dieser sehr gute Weißeindruck ist auch dann noch im wesentlichen unverändert, wenn das Display unter sehr flachem Winkel betrachtet wird. Die sehr guten Kontrast- und Weißeigenschaften weitgehend unabhängig vom Blickwinkel haben, wie bereits oben erwähnt, zum Namen des Displays (EVA = Extended Viewing Angle) geführt.

Es hat sich herausgestellt, daß die Multiplexierbarkeit des Displays stark von der Richtung der Polarisatoren zur Orientierungsrichtung abhängt. In Fig. 2 sind die Polarisationsrichtungen mit P1 und P2 bezeichnet. Sie schließen den Winkel ψ von 90° ein und stehen unter einem Winkel β von 45° verdreht gegen die Orientierungsrichtungen Mu und Mo. In Fig. 3 ist die Transmissions-Spannungs-Kennlinie für ein Display gemäß dem Ausführungsbeispiel der Fig. 1 und 2 dargestellt. Die maximale Transmission ist auf den Wert 100 % gesetzt. 10 % Transmission ergibt sich bei einer Ansteuerspannung von 2,8 V und 90 % Transmission bei 2,95 V. Nach der Formel von Alt und Pleshko (siehe IEEE Trans. Electron Devices ED 21, 146, 1974, 146) ergibt sich daraus eine Multiplexrate Nmax von 350, was bedeutet, daß bei einer Bildwiederholrate von 50 Hz 350 Zeilen im Multiplexbetrieb angesteuert werden können, wobei es möglich ist, jede Zeile zwischen 10 % und 90 % Transmission zu schalten.

Erstaunlich ist an der Kennlinie gemäß Fig. 3 für das Display gemäß dem Ausführungsbeispiel, daß die Kennlinie oberhalb von 90 % Transmission einen Knick aufweist. Eine solche geknickte Kennlinie ist bisher von keinem anderen Display bekannt. Kennlinien haben typischerweise einen Verlauf, wie er in Fig. 3 für ein EVA-Display aufgezeichnet ist, das sich von demjenigen des Ausführungsbeispiels dadurch unterscheidet, daß die Polarisationsrichtungen P1 und P2 parallel zu den Orientierungsrichtungen liegen, daß also der Winkel β statt 45° nunmehr 0° bzw. 90° beträgt. Die Multiplexrate für das Display mit derart angeordneten Polarisatoren ist erheblich schlechter als diejenige für das Display mit den um 45° gegenüber den Orientierungsrichtungen verdrehten Polarisatoren.

Wie bereits eingangs erwähnt, ist es bekannt, Polarisatoren gegenüber den Orientierungsrichtungen zu verdrehen; jedoch liegt für OMI-Displays die Abweichung nur bei einigen wenigen Grad, während sie für STN und SBE-Displays bei 30° bzw. 60° liegt. Eine zu optimalen Ergebnissen führende Abweichung von 45° ist bisher nicht bekannt, ebensowenig wie eine geknickte Kennlinie.

Noch bevorzugter als das EVA-Display gemäß dem Ausführungsbeispiel erscheint ein solches, das sich vom Ausführungsbeispiel dadurch unterscheidet, daß der Twist 360° statt 270° beträgt. Generell steigt mit zunehmendem Twist die Transmission und die Abhängigkeit des Kontrastes vom Blickwinkel wird vermindert. Der Twist sollte daher nicht geringer als 240° sein. Vielfache von 90° sind bevorzugt, da bei diesen Werten, also 270° und 360° jeweils der Kontrast optimal wird. Bei einer Versuchszelle mit 360° Twist bestand jedoch das Problem, daß sich in ihr bereits nach kurzer Betriebszeit Bereiche mit unterschiedlichem Twist bildeten. Dies wird darauf zurückgeführt, daß sich der von der Polyphenylenschicht erzeugte Pretilt durch eindiffundierende Natriumionen unter denjenigen Wert verringerte, der erforderlich ist, um homogenen Twist über die ganze Displayfläche zu stabilisieren. Es wird davon ausgegangen, daß sich bei besserer Verarbeitung des Polyphenylens oder bei Anwendung einer schräg aufgedampften SiO-Schicht als Orientierungsschicht ein Pretilt für die gesamte geforderte Betriebszeit eines EVA-Displays aufrechterhalten läßt, der ausreicht, einen Twist von 360° zu stabilisieren. Das bisher verwendete Polyphenylen wurde unter der Bezeichnung "HI-TILT" von der britischen Firma ICI bezogen. Es wurde durch übliches Spincoaten aufgebracht und zum Erzielen von Orientierungswirkung mit einer Samtwalze gerieben.

Der Wert δ sollte nicht größer werden als etwa 0,6µm, da ansonsten die Abweichung von einem weißen Farbeindruck zu groß wird. Je kleiner dieser Wert wird, desto weniger verändert das Display die Farbe des eingestrahlten Lichtes. Es wird jedoch die Transmission zunehmend schlechter. Bei einem Wert δ von 0,2µm beträgt die Transmission nur noch etwa 1/4 derjenigen der beschriebenen Zelle bei ansonsten gleichem Aufbau.

Um einen Twist von 240° zufriedenstellend stabilisieren zu können, muß der Pretilt mindestens etwa 7° betragen. Je höher er ist, desto unkritischer wird die Empfindlichkeit des Displays in bezug auf Schichtdickenänderungen oder Temperatureinwirkungen. Es ist bekannt, daß in verdrehtnematischen Flüssigkristallen fokalkonische Texturen auftreten können, wenn das Verhältnis von Schichtdicke zu Pitch ungünstige, experimentell zu ermittelnde Werte erreicht. Der Pitch ist dabei diejenige Ganghöhe, die an einem Flüssigkristall durch ein chirales Dotiermittel erzielt wird. Es wird immer nur soviel chirales Dotiermittel zugefügt, daß der Pitch P höher ist als die Schichtdicke d der Flüssigkristallschicht 12. Problematisch ist, daß der Pitch temperaturabhängig ist. Je höher der Pretilt ist, desto größer kann der Bereich des Quotienten d/P sein, ohne daß fokalkonische Texturen auftreten. Das Display ist dann gegen Dicken- und Temperaturänderungen sehr stabil. Bei einem Twist von 270° liegt der Pretilt vorzugsweise bei mindestens etwa 10°; im Ausführungsbeispiel bei etwa 15°.

Auf Schichten, die das Diffundieren von Natriumionen erschweren, kann verzichtet werden, wenn statt des üblicherweise für Flüssigkristallzellen verwendeten Glases ein natriumfreies Glas, z.B. ein Borsilikatglas oder ein Quarzglas verwendet wird.

Der Abstand zwischen den beiden Zellenplatten wird in üblicher Weise mit Hilfe von Spacern zwischen den Platten eingestellt. Durch einen Kleberrand aus einem üblichen Kleber werden die Platten zusammengehalten.

## Patentansprüche

1. Flüssigkristalldisplay (10) für Schwarz/Weiß-Darstellung mit einer zwischen zwei gekreuzten Polarisatoren (13.o, 13.u) angeordneten Flüssigkristallzelle, mit
- einer oberen und einer unteren Zellenplatte (11.o, 11.u) mit jeweils einer Orientierungsschicht (17) zum Vorgeben einer Orientierungsrichtung (Mo, Mu) für benachbarte Flüssigkristallmoleküle (18) einer Schicht (12) eines nematischen Flüssigkristalls zwischen den Zellenplatten, dessen Moleküle durch eine chirale Dotierung gegeneinander verdreht sind, wobei die den Zellenplatten benachbarten Moleküle im wesentlichen parallel zur Orientierungsrichtung der jeweils benachbarten Orientierungsschicht stehen, wodurch ein Twist vorgegeben ist,
**dadurch gekennzeichnet,** daß
- das Produkt aus Plattenabstand und Anisotropie des Brechungsindex nicht größer ist als etwa 0,6 µm,
- der Twist mindestens 240°, vorzugsweise 270°, beträgt, und
- das Material, welches die Orientierungsschicht (17) bildet, stoffrein ist und so gewählt ist, daß es außer der Orientierung der Flüssigkristallmoleküle (18) diesen zusätzlich einen Pretilt zwischen 7° und 20° vermittelt.

2. Display nach Anspruch 1,
**dadurch gekennzeichnet,** daß der Wert des genannten Produktes zwischen 0,35 und 0,45 µm liegt.

3. Display nach Anspruch 1,
**dadurch gekennzeichnet,** daß der Pretilt mindestens etwa 10° beträgt.

4. Display nach Anspruch 1,
**dadurch gekennzeichnet,** daß die Orientierungsschicht (17) durch Polyphenylen gebildet ist und zwischen dieser Schicht und der zugehörigen Zellenplatte (11.o, 11.u) eine Isolierschicht (16) zum Blockieren der Diffusion von Natriumionen aus dem Glas der Zellenplatte in das Polyphenylen vorhanden ist.

5. Display nach Anspruch 1,
**dadurch gekennzeichnet,** daß die Polarisatoren (13.o, 13.u) um etwa 45° gegenüber den Orientierungsrichtungen (Mo, Mu) verdreht sind.

6. Display nach Anspruch 1,
**dadurch gekennzeichnet,** daß die Zellenplatten (11.o, 11.u) aus natriumfreiem Glas bestehen.

## Claims

1. Liquid-crystal display (10) for black/white display, having a liquid-crystal cell which is disposed between two crossed polarizers (13.o, 13.u), and having
- an upper and a lower cell plate (11.o, 11.u) having in each case an orientation layer (17) for setting an orientation direction (Mo, Mu) for adjacent liquid-crystal molecules (18) of a layer (12) of a nematic liquid crystal between the cell plates, the molecules of which liquid crystal are rotated with respect to one another by a chiral doping, the molecules adjacent to the cell plates being essentially parallel to the orientation direction of the orientation layer adjacent in each case, as a result of which a twist is preset,
characterized in that
- the product of plate spacing and anisotropy of the refractive index is not greater than about 0.6 µm,
- the twist is at least 240°, preferably 270°, and
- the material forming the orientation layer (17) is materially pure and is so chosen that, in addition to the orientation of the liquid-crystal molecules (18), it also imparts to the latter a pretilt of between 7° and 20°.

2. Display according to Claim 1, characterized in that the value of the said product is between 0.35 and 0.45 µm.

3. Display according to Claim 1, characterized in that the pretilt is at least about 10°.

4. Display according to Claim 1, characterized in that the orientation layer (17) is formed by polyphenylene and there is present between said layer and the associated cell plate (11.o, 11.u) an insulating layer (16) for blocking the diffusion of sodium ions out of the glass of the cell plate into the polyphenylene.

5. Display according to Claim 1, characterized in that the polarizers (13.o, 13.u) are rotated by about 45° with respect to the orientation directions (Mo, Mu).

6. Display according to Claim 1, characterized in that the cell plates (11.o, 11.u) are composed of sodium-free glass.

## Revendications

1. Visuel à cristaux liquides (10) pour une représentantion en noir et blanc avec une cellule de cristal liquide disposée entre deux polarisateurs croisés (13.o, 13.u), comportant
- une plaque de cellule supérieure et une plaque de cellule inférieure (11.o, 11.u) avec, chacune, une couche d'orientation (17) pour prescrire une direction d'orientation (Mo, Mu) pour les molécules du cristal liquide (18), voisines, d'une couche (12) d'un cristal liquide nématique placé entre les plaques de cellule et dont les molécules tournent l'une par rapport à l'autre grâce à un dopage chiral, visuel dans le cas duquel les molécules voisines des plaques de la cellule sont sensiblement parallèles à la direction d'orientation de la couche d'orientation respectivement voisine, ce qui donne une torsion,
caractérisé par le fait
- que le produit de la distance entre les plaques et de l'anisotropie de l'indice de réfraction n'est pas supérieur à environ 0,6 µm,
- que la torsion vaut au moins 240°, de préférence 270° et
- que le matériau qui forme la couche d'orientation (17) est un matériau pur et qu'il est choisi de façon qu'en dehors de l'orientation des molécules (18) du cristal liquide il communique également à celles-ci un angle de préinclinaison (prétilt) valant entre 7° et 20°.

2. Visuel selon la revendication 1,
caractérisé par le fait que la valeur du produit mentionné se situe entre 0,35 et 0,45 µm.

3. Visuel selon la revendication 1,
caractérisé par le fait que l'angle de préinclinaison (prétilt) vaut au moins environ 10°.

4. Visuel selon la revendication 1,
caractérisé par le fait que la couche d'orientation (17) est formée par des polyphénylènes et qu'entre cette couche et la plaque de cellule correspondante (11.o, 11.u) existe une couche isolante (16) pour bloquer la diffusion, dans le polyphénylène, des ions sodium provenant du verre de la plaque de cellule.

5. Visuel selon la revendication 1,
caractérisé par le fait que les polarisateurs (13.o, 13.u) sont tournés d'environ 45° par rapport aux directions d'orientation (Mo, Mu).

6. Visuel selon la revendication 1,
caractérisé par le fait que les plaques de cellule (11.o, 11.u) sont constituées de verre exempt de sodium.
